# EUROPEAN PATENT SPECIFICATION

(11) **EP 3 438 429 B1**
(45) Date of publication and mention of the grant of the patent: **19.08.2020**
(21) Application number: 17774523.9
(22) Date of filing: 21.03.2017
(51) Int. Cl.: F02B 37/00, F02B 37/013, F02B 37/16, F02B 37/18, F02B 37/02, F02C 6/12

(54) **ENGINE WITH TURBO SUPERCHARGER**
MOTOR MIT AUFLADER
MOTEUR COMPRENANT UN TURBOCOMPRESSEUR

(30) Priority: 31.03.2016 JP 2016071481; 31.03.2016 JP 2016071482
(43) Date of publication of application: 06.02.2019
(73) Proprietor: Mazda Motor Corporation, Aki-gun Hiroshima 730-8670 (JP)
(72) Inventor: NIWA, Yasushi, Aki-gun Hiroshima 730-8670 (JP); NAKAJIMA, Mitsuhiro, Aki-gun Hiroshima 730-8670 (JP)
(74) Representative: Müller-Boré & Partner Patentanwälte PartG mbB
(86) International application number: PCT/JP2017/011231
(87) International publication number: WO 2017/169982

(56) References cited:
- WO-A1-2004/099586
- DE-A1- 19 709 879
- DE-A1- 19 822 874
- FR-A1- 2 945 577
- JP-A- 2010 281 282
- JP-A- 2010 281 282
- JP-A- 2011 007 185
- JP-U- H02 105 543
- US-A1- 2011 131 985
- US-A1- 2013 031 901
- US-A1- 2014 127 002
- US-A1- 2014 127 002

## Description

### Technical Field

The present invention relates to an engine with a turbo supercharger in which the turbo supercharger having at least two independent turbos are disposed on an engine body.

### Background Art

In an engine with a turbo supercharger, the turbo supercharger that supercharges intake air by using exhaust energy of the engine is mounted adjacent to one side wall of an engine body. In a housing of the turbo supercharger, an exhaust passage is disposed, and to the exhaust passage, exhaust air is supplied from the engine body. The exhaust passage includes an admission passage that admits exhaust air from the engine body, a turbine chamber accommodating a turbine, and a scroll passage that guides the exhaust air from the admission passage into the turbine chamber. The admitted exhaust air rotates the turbine about a turbine shaft, so that a blower impeller of a compressor coupled to the turbine shaft is rotated to supercharge intake air.

A turbo supercharger in which two independent turbos are disposed in series in the exhaust passage has been known. For example, Patent Literature 1 discloses a two-stage turbo supercharger having a large turbo operated mainly from the medium speed rotation range to the high speed rotation range of an engine, and a small turbo operated mainly in the low speed rotation range of the engine. A small turbine of the small turbo is disposed on the upstream side of a large turbine of the large turbo in an exhaust passage. The exhaust passage has a bypass passage that connects the admission passage and a large turbine chamber not via a small turbine chamber. In the bypass passage, a regulate valve is disposed, the regulate valve being opened and closed according to the rotation range of the engine.

The turbo supercharger is always required to improve an output by efficiently transmitting the kinetic energy of exhaust air to the turbine and to be made compact where possible. In the two-stage turbo supercharger, the exhaust passage has a complicated configuration, and it is thus difficult to satisfy the two requests at a higher level.

### Citation List

### Patent Literature

US 2014/127002 A1 discloses a multi-stage turbocharger arrangement, having a high-pressure stage, the high-pressure turbine of which has an associated first bypass valve; and having a low-pressure stage which is arranged downstream as viewed in the flow direction of the exhaust gases and which has a low-pressure turbine and a second bypass valve. At least one of the bypass valves is arranged in an associated, cooled housing module.

JP 2010 281282 A discloses a multistage supercharging device which includes a high-pressure supercharger having a turbine housing which forms a high-pressure side turbine chamber and a turbine wheel which is installed in the high-pressure side turbine chamber and a low-pressure supercharger having a turbine housing which forms a low-pressure side turbine chamber and a turbine wheel which is installed in the low-pressure side turbine chamber.

US 2011/131985 A1 discloses an exhaust gas assembly which includes an exhaust gas manifold which is connected with an exhaust gas inlet of a manifold and an adjusting member arranged in the manifold.

DE 198 22 874 A1 discloses a charging system which has two exhaust gas superchargers in a common casing.

Patent Literature 1: Japanese Patent No. 5499953

### Summary of Invention

An object of the present invention is to provide an engine with a turbo supercharger in which the turbo supercharger having at least two independent turbos is disposed, the engine being capable of giving large exhaust air kinetic energy to turbines and of being made compact.

An engine with a turbo supercharger according to an aspect of the present invention is defined in claim 1.

### Brief Description of Drawings

FIG. 1 is a perspective view of an engine with a turbo supercharger according to an embodiment of the present invention.
FIG. 2 is a perspective view, partially broken away, of a portion of the turbo supercharger of the engine.
FIG. 3 is a diagram schematically illustrating a configuration of the engine with a turbo supercharger and its peripheral components and flows of intake air and exhaust air.
FIG. 4 is a schematic cross-sectional view of the turbo supercharger according to the embodiment.
FIG. 5 is a perspective view illustrating an example of an exhaust bypass valve.
FIG. 6 is a cross-sectional view illustrating the flow of exhaust air in the turbo supercharger in a low speed rotation range of an engine body.
FIG. 7 is a cross-sectional view illustrating the flow of exhaust air in the turbo supercharger in a medium speed rotation range and a high speed rotation range of the engine body.
FIG. 8 is a schematic cross-sectional view of a turbo supercharger according to a modification.

### Description of Embodiments

### [Schematic configuration of engine]

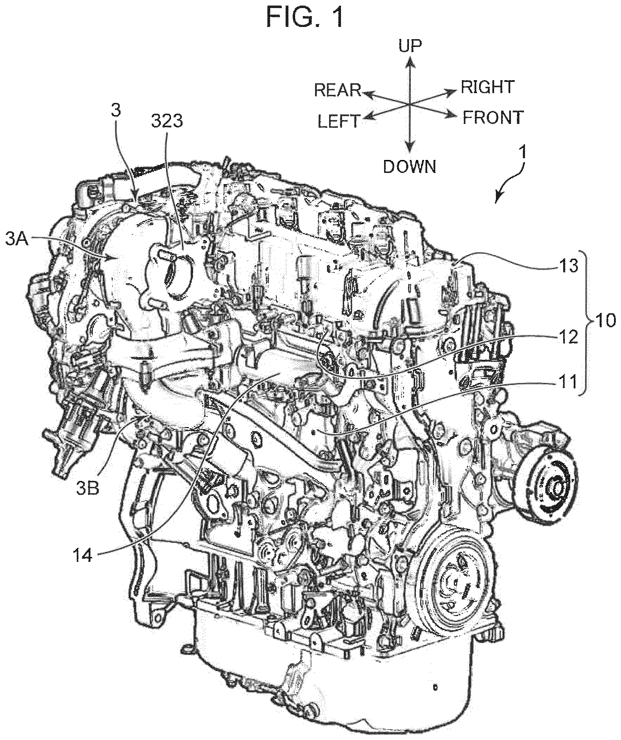

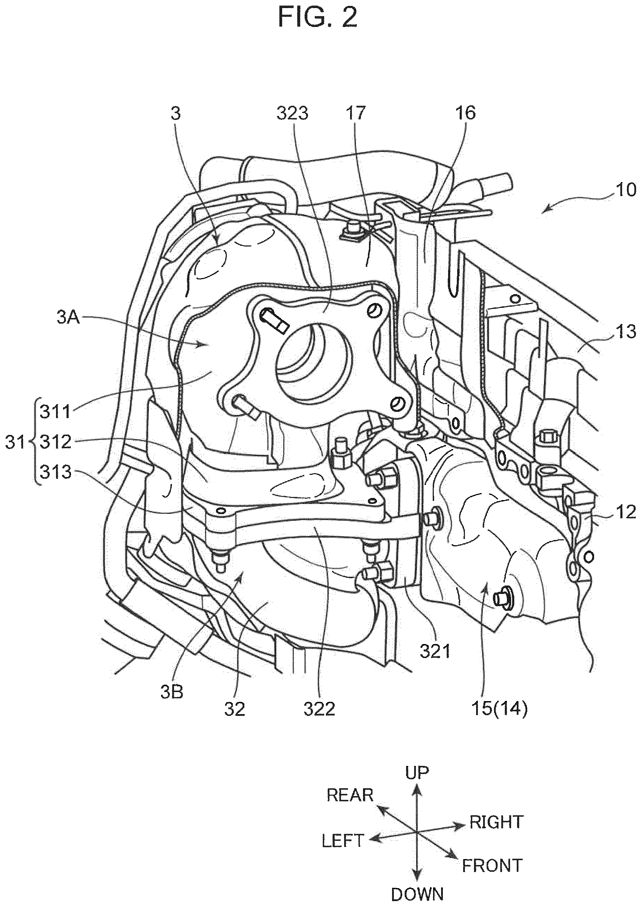

An engine with a turbo supercharger according to an embodiment of the present invention will be described below in detail with reference to the drawings. First, a schematic configuration of the engine will be described. FIG. 1 is a perspective view of an engine with a turbo supercharger 1 according to the embodiment of the present invention, and FIG. 2 is a perspective view, partially broken away, of a portion of a turbo supercharger 3 of the engine 1. In FIGS. 1 and 2, and other figures, the indication of front, rear, left, right, up, and down directions is given. This is for the sake of convenience of the description, and does not always indicate the actual directions.

The engine with a turbo supercharger 1 includes an engine body 10 with multi-cylinder, an exhaust manifold 14 coupled to the left side surface of the engine body 10, an intake manifold (not illustrated), and the turbo supercharger 3 disposed adjacent to the left side of the engine body 10. The periphery of the exhaust manifold 14 is surrounded by a manifold insulator 15, the left side surface of the engine body 10 is covered by an engine body insulator 16, and the periphery of the turbo supercharger 3 is covered by a turbo insulator 17, although FIG. 1 illustrates the engine with a turbo supercharger 1 in a state where the manifold insulator 15, the engine body insulator 16, and the turbo insulator 17 are removed.

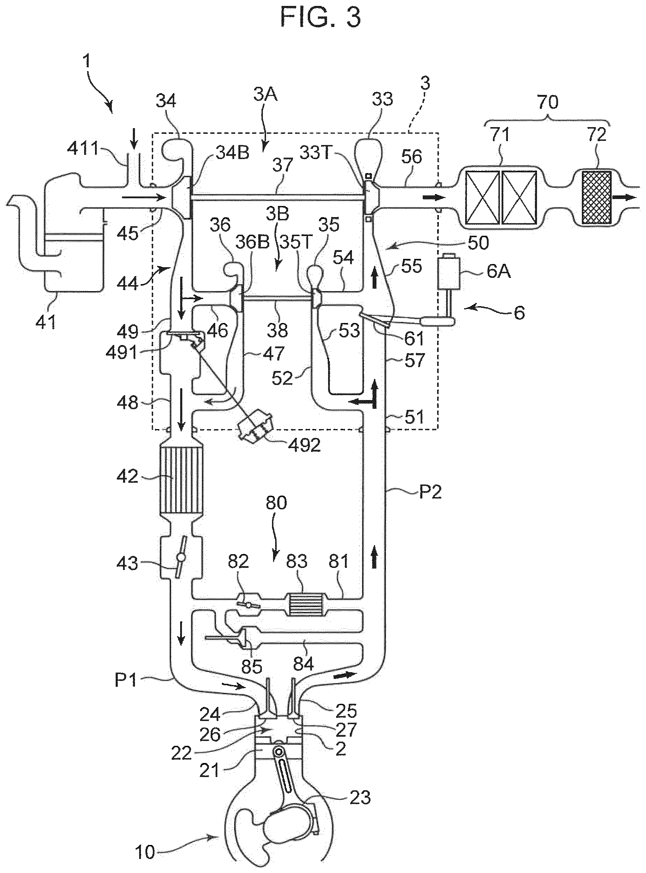

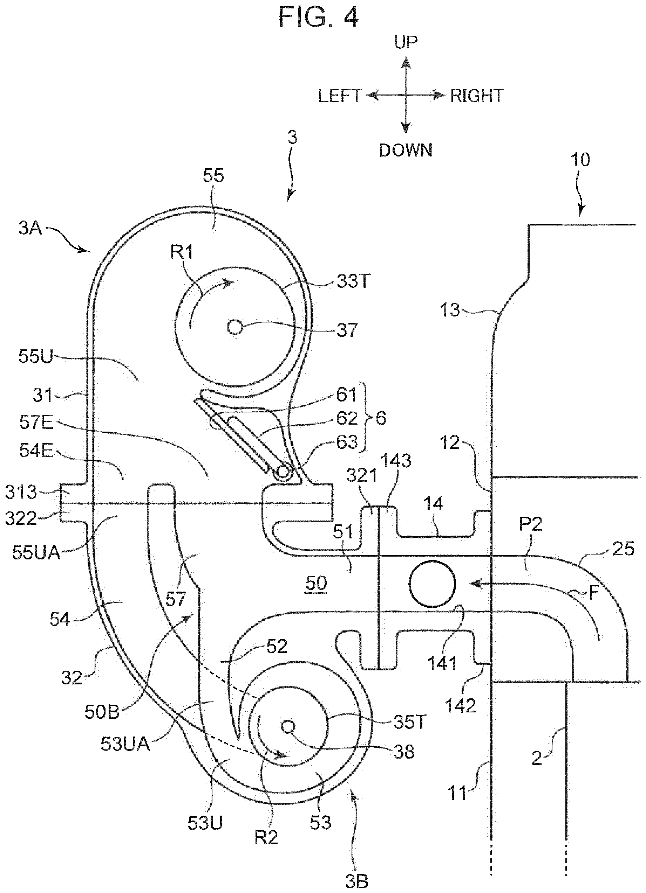

The engine body 10 is an in-line four-cylinder diesel engine, and has a cylinder block 11, a cylinder head 12 mounted on the upper surface of the cylinder block 11, and a cylinder head cover 13 disposed on the upper side of the cylinder head 12. The cylinder block 11 has four cylinders 2 defining fuel combustion chambers (one of them is illustrated in FIGS. 3 and 4 described later).

The exhaust manifold 14 has, in the interior of the exhaust manifold 14, a manifold passage 141 (FIG. 4) collecting exhaust gas discharged from exhaust ports 25 of the respective cylinders 2 to one flow passage. The intake side of the exhaust manifold 14 is coupled to the cylinder head 12, and the exhaust side of the exhaust manifold 14 is connected to the turbo supercharger 3.

The turbo supercharger 3 is a device that supercharges intake air admitted into the engine body 10 by using exhaust energy discharged from the engine body 10. The turbo supercharger 3 has a large turbo 3A (first turbo) that is operated mainly from the medium speed rotation range to the high speed rotation range of the engine body 10 to supercharge intake air, and a small turbo 3B (second turbo) that is operated mainly in the low speed rotation range of the engine body 10 to supercharge intake air. In the embodiment, the small turbo 3B is joined to the lower side of the large turbo 3A. Each of the large turbo 3A and the small turbo 3B has a turbine chamber disposed on the front side, and a compressor chamber disposed on the rear side. The turbo supercharger 3 has, in the interior of the turbo supercharger 3, an exhaust passage into which exhaust air is supplied from the engine body 10 via each of the turbine chambers, and an intake passage through which intake air admitted into the engine body 10 flows via each of the compressor chambers. That is, each of the turbine chambers is assembled into the exhaust passage of the engine body 10, and each of the compressor chambers is assembled into the intake passage of the engine body 10.

FIG. 2 illustrates a large turbo housing 31 demarcating a large turbine chamber 33 (FIG. 3) of the large turbo 3A, and a small turbo housing 32 demarcating a small turbine chamber 35 (FIG. 3) of the small turbo 3B. The large turbo housing 31 has a sheet metal housing 311 including a sheet metal case and demarcating a large scroll passage 55 and others described later, and a housing base 312 supporting the lower end of the sheet metal housing 311. To the lower portion of the housing base 312, an upper flange 313 is disposed.

On the other hand, the small turbo housing 32 is a housing including a cast iron case. On the upstream side of the exhaust passage, an admission flange 321 is disposed, and on the downstream side of the exhaust passage, a lower flange 322 is disposed, so that the admission flange 321 and the lower flange 322 are integrated. The admission flange 321 is a flange for coupling the small turbo housing 32 to the exhaust manifold 14, and is a portion that is the inlet of exhaust air into the turbo supercharger 3. The lower flange 322 is a flange for coupling the small turbo housing 32 to the large turbo housing 31. The upper flange 313 is placed on the lower flange 322, and both are then bolt fastened, so that the large turbo housing 31 and the small turbo housing 32 are integrated. In a portion that is the outlet of exhaust air from the turbo supercharger 3, an exhaust side flange 323 is disposed. To the exhaust side flange 323, a downstream side piping of the exhaust passage is connected.

The manifold insulator 15 is an insulator that performs heat insulation so that peripheral components do not suffer thermal damage due to heat emitted from the exhaust manifold 14 through which hot exhaust air flows. The engine body insulator 16 protects the cylinder head cover 13, a harness, and sensors from heat emitted from the exhaust manifold 14 and the turbo supercharger 3. Likewise, the turbo insulator 17 is an insulator that prevents thermal damage to the peripheral components by covering the peripheries of the large turbo housing 31 and the small turbo housing 32 through which hot exhaust air flows.

### [Internal configuration of engine]

FIG. 3 is a diagram schematically illustrating a configuration of the engine with a turbo supercharger 1 and its peripheral components and flows of intake air and exhaust air. The engine 1 has the engine body 10, an intake passage P1 for admitting combustion air into the engine body 10, an exhaust passage P2 for discharging combustion gas (exhaust air) generated in the engine body 10, the turbo supercharger 3 having a passage configuring part of the intake passage P1 and a passage configuring part of the exhaust passage P2, an exhaust air purification device 70 disposed near the downstream end of the exhaust passage P2, and an exhaust gas recirculation (EGR) device 80 disposed between the intake passage P1 and the exhaust passage P2.

Each of the cylinders 2 of the engine body 10 has a piston 21, a combustion chamber 22, a crankshaft 23, an intake port 24, each of the exhaust ports 25, an intake valve 26, and an exhaust valve 27. In FIG. 3, one cylinder 2 is illustrated. The piston 21 is accommodated in the cylinder 2 so as to be reciprocatively movable. The combustion chamber 22 is formed on the upper side of the piston 21 in the cylinder 2. Into the combustion chamber 22, a diesel fuel is injected from an injector (not illustrated). The fuel injected from the injector is mixed with air supplied from the intake passage P1 to self-ignite in the combustion chamber 22. The piston 21 is pushed down by an expansion force due to this combustion to reciprocatively move in an up-down direction.

The crankshaft 23 is an output shaft of the engine body 10, and is disposed below the piston 21. The piston 21 and the crankshaft 23 are coupled to each other via a connecting rod. The crankshaft 23 rotates about the center axis of the crankshaft 23 according to the reciprocating movement of the piston 21. The intake port 24 is an opening that admits air supplied from the intake passage P1 (intake air) into the cylinder 2. The exhaust port 25 is an opening for drawing exhaust air generated by the fuel combustion in the cylinder 2 out to the exhaust passage P2. The intake valve 26 is a valve that opens and closes the intake port 24, and the exhaust valve 27 is a valve that opens and closes the exhaust port 25.

Sequentially from the upstream side of the flow of intake air, in the intake passage P1, an air cleaner 41, a compressor of the turbo supercharger 3 (a large compressor chamber 34 and a small compressor chamber 36), an intercooler 42, and a throttle valve 43 are disposed. The downstream end of the intake passage P1 is connected to the intake port 24 via the intake manifold (not illustrated). The air cleaner 41 purifies air taken into the intake passage P1. The intercooler 42 cools intake air to be sent through the intake port 24 into the combustion chamber 22. The throttle valve 43 is a valve that adjusts the amount of the intake air to be sent into the combustion chamber 22. It is to be noted that to the upstream side of the turbo supercharger 3 in the intake passage P1, a blow-by recirculation path 411 that sends blow-by gas into the combustion chamber 22 is connected. The intake air is supercharged when passing through the compressor of the turbo supercharger 3 described later in detail.

The upstream end of the exhaust passage P2 is connected to the exhaust port 25 via the exhaust manifold 14. Sequentially from the upstream side of the flow of exhaust air, in the exhaust passage P2, the turbine of the turbo supercharger 3 (the small turbine chamber 35 and the large turbine chamber 33) and the exhaust air purification device 70 are disposed. The exhaust air purification device 70 includes a catalytic device 71 including an NOx occlusion reduction catalyst that temporarily occludes NOx in exhaust air and then reduces the NOx, and a diesel particulate filter (DPF) 72 that collects particulate substances in exhaust air. The kinetic energy that exhaust air has is recovered when the exhaust air passes through the turbine of the turbo supercharger 3.

The EGR device 80 is a device for recirculating part of exhaust air discharged from the engine body 10 (EGR gas) into the intake air. The EGR device 80 has a first EGR passage 81 and a second EGR passage 84 respectively communicating with the exhaust passage P2 and the intake passage P1, a first EGR valve 82 that opens and closes the first EGR passage 81, and a second EGR valve 85 that opens and closes the second EGR passage 84. In the first EGR passage 81, an EGR cooler 83 is disposed. EGR gas is cooled by the EGR cooler 83 while passing through the first EGR passage 81, and then flows into the intake passage P1. On the other hand, in the second EGR passage 84, the EGR cooler is not disposed, and EGR gas can flow into the intake passage P1 while the EGR gas is hot. The first EGR passage 81 and the second EGR passage 84 communicate with the portion of the exhaust passage P2 on the upstream side of the turbo supercharger 3 and the portion of the intake passage P1 on the downstream side of the throttle valve 43. Therefore, exhaust air to be admitted into the turbine of the turbo supercharger 3 is supplied into the intake port 24 together with the intake air.

### [Detail of turbo supercharger]

Next, an internal configuration of the turbo supercharger 3 according to the embodiment will be described with reference to FIG. 3 illustrated above and FIG. 4 illustrating a schematic cross-section of the turbo supercharger 3. As already described, the turbo supercharger 3 has the large turbo 3A to be operated from the medium speed rotation range to the high speed rotation range, and the small turbo 3B to be operated in the low speed rotation range. The large turbo 3A has the large turbine chamber 33 and the large compressor chamber 34. Likewise, the small turbo 3B has the small turbine chamber 35 and the small compressor chamber 36. The large turbine chamber 33 and the small turbine chamber 35 communicate with the exhaust passage P2, and the large compressor chamber 34 and the small compressor chamber 36 communicate with the intake passage P1.

In the large turbine chamber 33, a large turbine 33T (first turbine) is accommodated, and in the large compressor chamber 34, a large blower 34B is accommodated. The large turbine 33T and the large blower 34B are coupled by a large turbine shaft 37 (first turbine shaft). That is, the large turbine 33T is mounted at one end of the large turbine shaft 37, and the large blower 34B is mounted at the other end of the large turbine shaft 37. The large turbine 33T receives the flow of exhaust air (kinetic energy), and rotates about the axis of the large turbine shaft 37. The large blower 34B also rotates about the axis of the large turbine shaft 37 to compress (supercharge) intake air. When the large turbine 33T receives the kinetic energy of the exhaust air to rotate, the large blower 34B integrally rotates about the axis of the large turbine shaft 37.

As the large turbine 33T, it is possible to use an impeller that has a plurality of vanes and rotates about the axis of the large turbine shaft 37 by the collision of exhaust air with these vanes. In addition, as the large turbine 33T, a variable geometry turbine (VGT) that has a plurality of angle-variable nozzle vanes on the outer periphery of the turbine and can adjust the flow speed of exhaust air flowing into the large turbine 33T (that is, the capacity of the turbine) according to the rotational speed of the engine is used, which is one of the preferred embodiments.

In the small turbine chamber 35, a small turbine 35T (second turbine) is accommodated, and in the small compressor chamber 36, a small blower 36B is accommodated. The small turbine 35T and the small blower 36B are coupled by a small turbine shaft 38 (second turbine shaft). That is, the small turbine 35T is mounted at one end of the small turbine shaft 38, and the small blower 36B is mounted at the other end of the small turbine shaft 38. The small turbine 35T receives the kinetic energy of exhaust air, and rotates about the axis of the small turbine shaft 38. The small blower 36B also rotates about the axis of the small turbine shaft 38 to compress (supercharge) intake air. When the small turbine 35T receives the kinetic energy of the exhaust air to rotate, the small blower 36B integrally rotates about the axis of the small turbine shaft 38. It is to be noted that as the small turbine 35T, a fixed geometry turbine (that is, FGT) that cannot vary the flow speed of the exhaust air flowing into the small turbine 35T can be used.

The capacity of the large turbine 33T is set to be larger than the capacity of the small turbine 35T, and the capacity of the large blower 34B is set to be larger than the capacity of the small blower 36B. With this configuration, the large turbo 3A rotates the large turbine 33T by exhaust air having a larger flow rate than the small turbo 3B, and can supercharge intake air having a larger flow rate by the rotation of the large blower 34B.

As a passage serving as part of the intake passage P1, the turbo supercharger 3 has a supercharger internal intake passage 44 in the interior of the turbo supercharger 3. The supercharger internal intake passage 44 includes an intake air admission passage 45, a first main passage 46, a second main passage 47, an outlet passage 48, and an intake bypass passage 49. The intake air admission passage 45 is an intake passage on the most upstream side in the turbo supercharger 3, and is a passage extending from an axial direction of the large turbine shaft 37 toward the large blower 34B in the large compressor chamber 34. The first main passage 46 is a passage that guides intake air from the outer periphery of the large blower 34B toward the axis of the small blower 36B in the small compressor chamber 36. The second main passage 47 is a passage extending from the outer periphery of the small blower 36B toward the outlet passage 48. The outlet passage 48 is an intake passage on the most downstream side in the turbo supercharger 3, and is a passage connected to the intercooler 42. In this manner, in the flow of the intake air, the large blower 34B is disposed on the upstream side of the small blower 36B.

The intake bypass passage 49 is a passage that bypasses the small compressor chamber 36, that is, a passage that guides the intake air to the downstream without giving the intake air to the small blower 36B. Specifically, the intake bypass passage 49 is branched from the middle of the first main passage 46 connecting the large compressor chamber 34 and the small compressor chamber 36, and is merged into the outlet passage 48 together with the second main passage 47. In the intake bypass passage 49, an intake bypass valve 491 that opens and closes the intake bypass passage 49 is disposed.

In a state where the intake bypass valve 491 is fully closed to close the intake bypass passage 49, the total amount of the intake air flows into the small compressor chamber 36. On the other hand, in a state where the intake bypass valve 491 is opened, most of the intake air bypasses the small compressor chamber 36, and flows through the intake bypass passage 49 to the downstream side. That is, the small blower 36B accommodated in the small compressor chamber 36 resists the flow of the intake air, so that in a state where the intake bypass valve 491 is opened, most of the intake air flows into the intake bypass passage 49 having a smaller resistance. The intake bypass valve 491 is opened and closed by a valve actuator 492 of a negative pressure type.

As a passage serving as part of the exhaust passage P2, the turbo supercharger 3 has a supercharger internal exhaust passage 50 in the interior of the turbo supercharger 3. The supercharger internal exhaust passage 50 includes an exhaust air admission passage 51 (admission passage), a communication passage 52, a small scroll passage 53 (second scroll passage), a between-turbo passage 54, the large scroll passage 55 (first scroll passage), a discharge passage 56, and an exhaust bypass passage 57. As apparent from FIG. 4, the exhaust air admission passage 51, the communication passage 52, and the small scroll passage 53 are passages formed in the small turbo housing 32, the large scroll passage 55 and the discharge passage 56 are passages formed in the large turbo housing 31, and the between-turbo passage 54 and the exhaust bypass passage 57 are passages formed across both of the large turbo housing 31 and the small turbo housing 32. In the embodiment, the small turbine 35T (that is, the small turbo 3B) is disposed on the upstream side of the large turbine 33T (that is, the large turbo 3A) in the exhaust passage P2.

The exhaust air admission passage 51 is an exhaust passage on the most upstream side in the turbo supercharger 3, and is a passage that admits exhaust air from the engine body 10 side. The communication passage 52 is a passage that is joined to the downstream of the exhaust air admission passage 51 and guides the exhaust air toward the small turbine chamber 35. The small scroll passage 53 defines part of the small turbine chamber 35, and is a passage that guides the exhaust air toward the small turbine 35T. The downstream end of the communication passage 52 is joined to an upstream section 53U (second upstream section) of the small scroll passage 53. The small scroll passage 53 is a scrolled passage disposed so as to extend around the outer periphery of the small turbine 35T, and has a flow passage width that is gradually narrowed toward the downstream. The exhaust air flows from the small scroll passage 53 toward the center in a radius direction of the small turbine 35T, and rotates the small turbine 35T about the axis of the small turbine shaft 38.

The between-turbo passage 54 is a passage that connects the small turbine 35T and an upstream section 55U (first upstream section) of the large scroll passage 55. The upstream portion of the between-turbo passage 54 is the portion that extends out from the small turbine chamber 35 in the axial direction of the small turbine 35T, and the downstream portion of the between-turbo passage 54 is the portion joined to the upstream section 55U. The exhaust air that has flown from the outer periphery of the small turbine 35T into the inside in the radius direction of the small turbine 35T and performed an expansion work with respect to the small turbine 35T is taken out from the between-turbo passage 54, and is directed toward the large turbine 33T.

The large scroll passage 55 defines part of the large turbine chamber 33, and is a passage that guides the exhaust air toward the large turbine 33T. The large scroll passage 55 is a scrolled passage disposed so as to extend around the outer periphery of the large turbine 33T, and has a flow passage width that is gradually narrowed toward the downstream. The exhaust air flows from the large scroll passage 55 toward the center in the radius direction of the large turbine 33T, and rotates the large turbine 33T about the axis of the large turbine shaft 37. The discharge passage 56 is an exhaust passage at the most downstream in the turbo supercharger 3, and extends out from the large turbine chamber 33 in the axial direction of the large turbine 33T. The exhaust air that has flown from the outer periphery of the large turbine 33T into the inside in the radius direction of the large turbine 33T and performed an expansion work with respect to the large turbine 33T is taken out from the discharge passage 56. The downstream end of the discharge passage 56 is an opening disposed in the exhaust side flange 323, and is connected to the exhaust passage to the exhaust air purification device 70 on the downstream.

The exhaust bypass passage 57 is a passage that bypasses the small turbine chamber 35, that is, a passage that guides the exhaust air to the downstream (large turbine 33T) without allowing the exhaust air to act on the small turbine 35T. Specifically, the exhaust bypass passage 57 is branched from between the exhaust air admission passage 51 and the communication passage 52, is merged into the upstream section 55U of the large scroll passage 55, and bypasses the small scroll passage 53 and the between-turbo passage 54. In the exhaust bypass passage 57, an exhaust bypass valve 6 that opens and closes the passage 47 is disposed. The exhaust bypass valve 6 includes a valve body 61 that actually opens and closes the exhaust bypass passage 57, and a valve actuator 6A that operates the valve body 61.

In a state where the exhaust bypass valve 6 (valve body 61) is fully closed to close the exhaust bypass passage 57, the total amount of the exhaust air flows into the small turbine chamber 35. It is to be noted that when the EGR device 80 is operated to recirculate EGR gas, the total amount of gas formed by removing the EGR gas from the exhaust air discharged from the engine body 10 flows into the small turbine chamber 35. On the other hand, in a state where the exhaust bypass valve 6 is opened, most of the exhaust air bypasses the small turbine chamber 35, and flows into the large turbine chamber 33 (large scroll passage 55) on the downstream side. That is, the small turbine 35T accommodated in the small turbine chamber 35 resists the flow of the exhaust air, so that in a state where the exhaust bypass valve 6 is opened, most of the exhaust air flows into the exhaust bypass passage 57 having a smaller resistance. That is, the exhaust air flows to the downstream side without passing through the small turbine 35T.

In other words, even when the exhaust bypass valve 6 is operated in any manner, the exhaust air certainly passes through the large turbine 33T of the large turbine chamber 33. That is, the large turbo 3A is always operated to allow the intake air to be supercharged, so that the boost pressure of the intake air by the turbo supercharger 3 can be increased to enhance the energy efficiency of the entire engine system.

As the basic operation, the exhaust bypass valve 6 is fully closed when the engine body 10 is operated in the low speed rotation range, and the exhaust air is supplied into the small turbine 35T through the communication passage 52 and the small scroll passage 53. Since the small turbine 35T has a small inertia, even when the flow rate of the exhaust air is small, the rotational speed can be increased at an early stage, so that the supercharging force by the small blower 36B can be increased. Thereafter, the exhaust air passes through the between-turbo passage 54 and the large scroll passage 55, and is supplied into the large turbine 33T. That is, both of the large turbine 33T and the small turbine 35T rotate in the low speed rotation range, and with the rotation, the large blower 34B and the small blower 36B also rotate. Therefore, both of the large turbo 3A and the small turbo 3B can be operated to supercharge the intake air. Here, when the VGT is disposed on the large turbine 33T, the opening degree of the VGT is desirably made smaller so that the flow speed of the exhaust air that flows into the large turbine 33T can be increased. With this configuration, the supercharging force by the large blower 34B in the low speed rotation range can be increased.

On the other hand, when the engine body 10 is operated from the medium speed rotation range to the high speed rotation range, the exhaust bypass valve 6 is fully opened to supply the exhaust air through the exhaust bypass passage 57 exclusively into the large turbine 33T. That is, the exhaust air can be supplied into the large turbine 33T by minimizing the flow resistance of the exhaust air, so that the energy efficiency can be enhanced. It is to be noted that when the large turbine 33T has the VGT, the VGT opening degree is desirably a basic VGT opening degree to obtain a predetermined boost pressure.

The valve actuator 6A includes a motor-driven actuator device, and can not only simply open and close the valve body 61, but also adjust the opening degree of the valve body 61 between the fully closing posture and the fully opening posture. The opening degree of the valve body 61 is set so that the boost pressure is the target pressure for each operation conditions. The target boost pressure and the opening degree of the valve body 61 are previously set according to the rotational speed of the engine and the load of the engine. According to the setting, the valve actuator 6A controls the opening degree of the valve body 61.

### [Detail of exhaust passage in turbo supercharger]

Next, mainly referring to FIG. 4, the specific disposing relation of the supercharger internal exhaust passage 50 and the shapes of the passages in the turbo supercharger 3 will be described in detail. First, the exhaust air admission passage 51 is a passage that has an opening in the end surface of the admission flange 321 described above and extends leftward. The exhaust air admission passage 51 is disposed between the large turbo 3A and the small turbo 3B. In detail, the large turbo 3A and the small turbo 3B are disposed in the up-down direction, and the exhaust air admission passage 51 is disposed at the height position midway between the large turbo 3A and the small turbo 3B.

On the left side surface of the engine body 10 (cylinder head 12), the exhaust opening of the exhaust port 25 is disposed. The exhaust manifold 14 has an intake side flange 142 on the right end side of the exhaust manifold 14, and an exhaust side flange 143 on the left end side of the exhaust manifold 14. In the intake side flange 142, the right end opening of the manifold passage 141 is disposed, and in the exhaust side flange 143, the left end opening of the manifold passage 141 is disposed. The intake side flange 142 is aligned with the exhaust opening of the exhaust port 25, and is coupled to the cylinder head 12. The exhaust side flange 143 is coupled to the admission flange 321. Consequently, the exhaust port 25 and the exhaust air admission passage 51 (supercharger internal exhaust passage 50) are brought into a communication state via the manifold passage 141, and as indicated by arrow F in FIG. 4, exhaust air from the engine body 10 side can be taken into the turbo supercharger 3.

A branch passage 50B is disposed between the exhaust air admission passage 51 and each of the upstream section 53U of the small scroll passage 53 and the upstream section 55U of the large scroll passage 55, the branch passage 50B having a Y-shape and connecting the exhaust air admission passage 51 and each of the upstream section 53U of the small scroll passage 53 and the upstream section 55U of the large scroll passage 55. It is to be noted that the upstream section 53U is a scroll starting point portion in which the small scroll passage 53 starts scrolling toward the axis of the small turbine 35T, and that the upstream section 55U is a scroll starting point portion in which the large scroll passage 55 starts scrolling toward the axis of the large turbine 33T. Of the branch passage 50B, the passage that extends downward from the downstream end of the exhaust air admission passage 51 and is connected to the upstream section 53U is the communication passage 52, and the passage that extends upward from the downstream end of the exhaust air admission passage 51 and is connected to the upstream section 55U is the exhaust bypass passage 57.

The small scroll passage 53 is a passage that scrolls in the counterclockwise direction in FIG. 4, whereas the large scroll passage 55 is a passage that scrolls in a clockwise direction in FIG. 4. That is, the directions in which both of the small scroll passage 53 and the large scroll passage 55 scroll are set to opposite directions to each other. This is because the upstream section 53U of the small scroll passage 53 and the upstream section 55U of the large scroll passage 55 are disposed as follows.

The small scroll passage 53 is a passage in which the upstream section 53U is disposed on the side that is farther than the small turbine shaft 38 (left side) with respect to the left side surface of the engine body 10, and the portion of the small scroll passage 53 that scrolls from the upstream section 53U toward the downstream side so as to face the side closer to the engine body 10 (right side) than the small turbine shaft 38 is. The upstream section 53U of the small scroll passage 53 is opened upward. The small scroll passage 53 extends from the upstream section 53U in a lower right direction, passes downward of the small turbine shaft 38, and thereafter, passes rightward of the small turbine shaft 38 to extend upward. The downstream end of the small scroll passage 53 that extends around the periphery of the small turbine 35T is located on the left side of the small turbine shaft 38.

Likewise, the large scroll passage 55 is a passage in which the upstream section 55U is disposed on the side that is farther than the large turbine shaft 37 (left side) with respect to the left side surface of the engine body 10, and the portion of the large scroll passage 55 that scrolls from the upstream section 55U toward the downstream side so as to face the side closer to the engine body 10 (right side) than the large turbine shaft 37 is. The upstream section 55U of the large scroll passage 55 is opened downward. The large scroll passage 55 extends from the upstream section 55U in an upper right direction, passes upward of the first turbine shaft 37, and thereafter, passes rightward of the large turbine shaft 37 to extend downward. The downstream end of the large scroll passage 55 that extends around the periphery of the large turbine 33T is located on the left side of the large turbine shaft 37.

In this manner, the small scroll passage 53 and the small scroll passage 55 are disposed so that the respective upstream sections 53U and 55U are substantially opposite in the up-down direction. In addition, the exhaust air admission passage 51 is located midway between the upstream sections 53U and 55U. Therefore, both of the small scroll passage 53 and the large scroll passage 55 can be connected to the exhaust air admission passage 51 by the Y-shaped compact branch passage 50B described above.

In addition, the directions in which both of the small scroll passage 53 and the large scroll passage 55 scroll are opposite directions to each other, so that the rotation direction of the small turbine 35T and the rotation direction of the large turbine 33T are also opposite. That is, the small turbine 35T rotates in the counterclockwise direction (predetermined first rotation direction) about the axis of the small turbine shaft 38 in the cross section illustrated in FIG. 4 along a scroll direction of the small scroll passage 53. On the other hand, the large turbine 33T rotates in the clockwise direction (second rotation direction) about the axis of the large turbine shaft 37 along the scroll direction of the large scroll passage 55.

Further, such disposition of the small scroll passage 53 enables an upstream side passage joined to the upstream section 53U to be a straight or gently curved exhaust passage, and such disposition of the large scroll passage 55 enables an upstream side passage joined to the upstream section 55U to be a straight or gently curved exhaust passage. As illustrated in FIG. 4, an upstream side passage 53UA that is the portion of the communication passage 52 extending from at least the upstream section 53U to the upstream side is a passage extending substantially straightly and downward. In addition, an upstream side passage 55UA that is the portion of the between-turbo passage 54 extending from at least the upstream section 55U to the upstream side is a passage extending substantially straightly and upward. Therefore, exhaust air can enter the upstream section 53U of the small scroll passage 53 along the straight route with a small flow resistance, and exhaust air can enter the upstream section 55U of the large scroll passage 55 along the straight route with a small flow resistance.

The between-turbo passage 54 extends out from the disposing position of the small turbine 35T in the axial direction of the small turbine 35T, changes its path in the upper left direction, and passes through the substantially straight upstream side passage 55UA (the passage near the downstream of the between-turbo passage 54) so as to be connected to the upstream section 55U of the large scroll passage 55. As already described, the exhaust bypass passage 57 is also the exhaust passage connected to the upstream section 55U. The disposing relation between the between-turbo passage 54 and the exhaust bypass passage 57 is in the relation in which the between-turbo passage 54 is disposed on the side that is farther than the exhaust bypass passage 57 with respect to the left side surface of the engine body 10.

As described above, the upstream section 55U is disposed on the side that is farther than the large turbine shaft 37 with respect to the left side surface of the engine body 10. Into the upstream section 55U, a downstream end 54E of the between-turbo passage 54 and a downstream end 57E of the exhaust bypass passage 57 are merged. However, the position relation between the downstream end 54E and the downstream end 57E is in the relation in which the downstream end 57E is opposite the upstream section 55U at a position closer to the engine body 10 than the downstream end 54E is.

In this manner, the exhaust bypass passage 57 and the downstream end 57E of the exhaust bypass passage 57 are disposed at a position closer to the engine body 10 discharging exhaust air, than the between-turbo passage 54 and the downstream end 54E of the between-turbo passage 54 are. Thus, the exhaust bypass passage 57 that simplistically connects the exhaust air admission passage 51 and the upstream section 55U can be easily set as an exhaust passage that is short and has a small curving degree.

On the other hand, such a disposing relation is a layout in which the upstream side passage 55UA of the upstream section 55U in the between-turbo passage 54 can be easily set in a straight or gently curved shape. That is, the exhaust bypass passage 57 is disposed on the side that is closer to the engine body 10, so that a space can be easily taken below the upstream section 53U opened downward. Further, in the embodiment, the small turbine shaft 38 is disposed in the position closer to the left side of the engine body 10 than the large turbine shaft 37 is, and the diameter of the small turbine 35T is small, so that an empty space can be easily created on the left side of the small turbo 3B. Therefore, by using the space below the upstream section 55U, the upstream side passage 55UA that is the downstream portion of the between-turbo passage 54 can be easily set to be substantially straight.

It is to be noted that the disposition of the small turbine shaft 38 on the side that is closer to the engine body 10 contributes to the setting of the communication passage 52 into a substantially straight shape. By disposing the small turbine shaft 38 to the right side with respect to the large turbine shaft 37, a space can be easily taken leftward of the small scroll passage 53. The upstream section 53U is located leftward of the small turbine shaft 38, and the diameter of the small scroll passage 53 is smaller than the diameter of the large scroll passage 55, so that the left space can secure a space corresponding thereto. Therefore, by using the left space, the upstream side passage 53UA for the communication passage 52 that is branched downward from the exhaust air admission passage 51 extending leftward can be substantially straight so as to be merged into the upstream section 53U.

### [About flow of exhaust air]

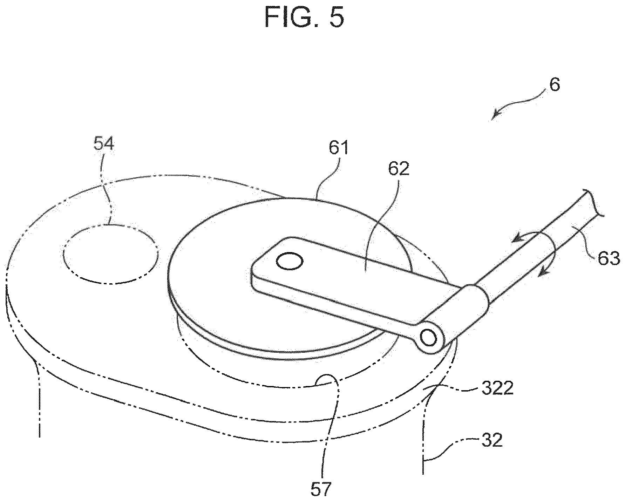

Next, further referring to FIGS. 5 to 7, the flow of exhaust air in the turbo supercharger 3 will be described in connection with the operation state of the exhaust bypass valve 6. FIG. 5 is a perspective view illustrating an example of the exhaust bypass valve 6. The exhaust bypass valve 6 has the valve body 61, a retaining piece 62, and a turning shaft 63. The valve body 61 opens and closes the exhaust bypass passage 57, as already described, and has a shape that can close the exhaust bypass passage 57, that is, a size larger than the opening size of the downstream end of the exhaust bypass passage 57. The retaining piece 62 is a rectangular member disposed on the rear face of the valve body 61, and retains the valve body 61 at one end side of the retaining piece 62. The turning shaft 63 extends in the direction substantially parallel to the large turbine shaft 37 (front-rear direction), and is coupled to the other end side of the retaining piece 62. The turning shaft 63 is turnable about the axis of the turning shaft 63 by the valve actuator 6A.

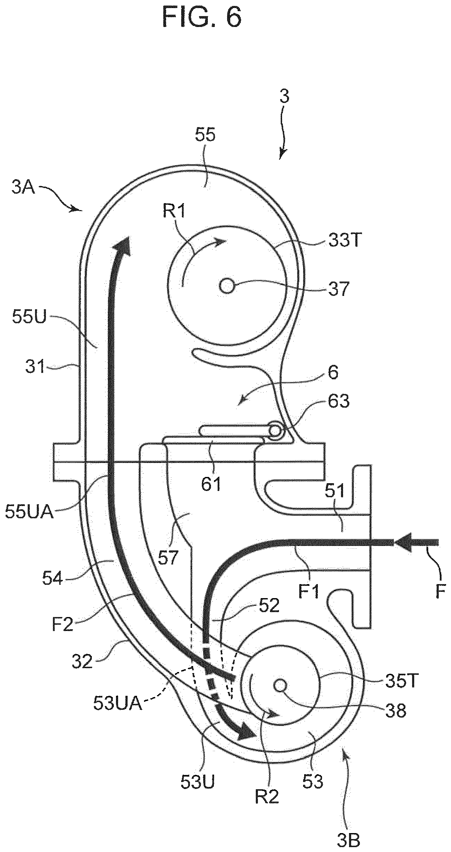

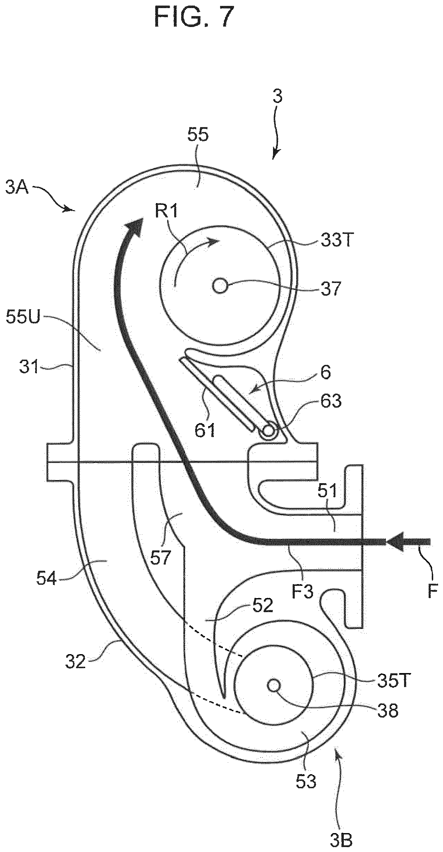

The turning shaft 63 supports the valve body 61 via the retaining piece 62 in a cantilever manner. Therefore, the turning shaft 63 turns about the axis of the turning shaft 63, so that the valve body 61 turns about the axis of the turning shaft 63. The valve actuator 6A turns the turning shaft 63 about the axis of the turning shaft 63 to posture change the valve body 61 between the posture closing the exhaust bypass passage 57 (FIG. 6) and the posture opening the exhaust bypass passage 57 (FIG. 7).

Here, in a cross section orthogonal to the large turbine shaft 37 (FIG. 4), the turning shaft 63 is disposed rightward of the exhaust bypass passage 57, that is, sideward of the exhaust bypass passage 57 on the side that is closer to the engine body 10. This considers that the valve body 61 can be easily posture changed from the closing posture to the opening posture without resisting the flow of the exhaust air that flows from the exhaust bypass passage 57 into the upstream section 55U of the large scroll passage 55. In addition, the valve body 61 in the opening posture is unlikely to resist the flow of the exhaust air.

FIG. 6 is a cross-sectional view illustrating the flow of exhaust air in the turbo supercharger 3 in the low speed rotation range of the engine body 10. In the low speed rotation range, the valve actuator 6A brings the valve body 61 into the closing posture to close the exhaust bypass passage 57. In this case, the exhaust air discharged from the engine body 10 side (arrow F) enters the exhaust air admission passage 51 disposed in the small turbo housing 32 of the turbo supercharger 3. The exhaust air is guided downward by the communication passage 52 so as to reach the upstream section 53U of the small scroll passage 53 (arrow F1). Then, to act on the small turbine 35T, the exhaust air flows in the direction from the small scroll passage 53 along the outer periphery of the small turbine 35T toward the small turbine shaft 38, and rotates the small turbine 35T in a counterclockwise direction R2.

Thereafter, the exhaust air is drawn out from the axial direction of the small turbine 35T, and enters the between-turbo passage 54. The exhaust air is guided upward along the between-turbo passage 54, and passes through the upstream side passage 55UA so as to reach the upstream section 55U of the large scroll passage 55 (arrow F2). At this time, the exhaust air flows from the small turbo housing 32 into the large turbo housing 31. Then, to act on the large turbine 33T, the exhaust air flows in the direction from the large scroll passage 55 along the outer periphery of the large turbine 33T toward the large turbine shaft 37, and rotates the large turbine 33T in a clockwise direction R1. Thereafter, the exhaust air is drawn out from the axial direction of the large turbine 33T, is discharged through the discharge passage 56 (FIG. 3) to the outside of the turbo supercharger 3, and is directed toward the exhaust air purification device 70.

FIG. 7 is a cross-sectional view illustrating the flow of exhaust air in the turbo supercharger 3 in the medium speed rotation range and the high speed rotation range of the engine body 10. From the medium speed rotation range to the high speed rotation range, the valve actuator 6A brings the valve body 61 into the opening posture to open the exhaust bypass passage 57. In this case, the exhaust air discharged from the engine body 10 side (arrow F) flows through the exhaust air admission passage 51 exclusively into the exhaust bypass passage 57 having a small flow resistance. Then, the exhaust air is guided upward to the left along the exhaust bypass passage 57, and flows from the rightward portion of the turbo supercharger 3 into the upstream section 55U of the large scroll passage 55 (arrow F3). At this time, the exhaust air flows from the small turbo housing 32 into the large turbo housing 31. Likewise, the exhaust air flows from the large scroll passage 55 into the large turbine 33T, and is drawn out from the axial direction of the large turbine 33T so as to be directed toward the discharge passage 56.

### [Operational effects]

The engine with a turbo supercharger 1 according to the embodiment, which has been described above, can provide the following operational effects. The engine with a turbo supercharger 1 has the structure in which the upstream section 53U that is the scroll starting point of the small scroll passage 53 is disposed on the side that is farther than the small turbine shaft 38 with respect to the engine body 10, and the upstream section 55U that is the scroll starting point of the large scroll passage 55 is disposed on the side that is farther than the large turbine shaft 37 with respect to the engine body 10. Consequently, allowance can be made in the layout of the exhaust passages from the exhaust air admission passage 51 to the upstream sections 53U and 55U (the communication passage 52 and the between-turbo passage 54), so that the exhaust passages are not required to be extremely curved. Therefore, the flow of exhaust air in the exhaust passages can be smooth, and large exhaust air kinetic energy can be given to the large turbine 33T and the small turbine 35T. In addition, the supercharger internal exhaust passage 50 in which the flow resistance of the exhaust air is small can be achieved.

In addition, the small scroll passage 53 and the large scroll passage 55 are passages scrolled so that the downstream sides of the upstream sections 53U and 55U face the side closer to the engine body 10 than the respective small turbine shaft 38 and large turbine shaft 37 are, and scroll in opposite directions to each other. For this, the large turbine 33T and the small turbine 35T rotate in opposite directions to each other. The exhaust passages that are set by assuming that both of the large turbine 33T and the small turbine 35T are rotated in the same direction are inevitably required to be largely curved, so that the turbo supercharger 3 tends to be made larger. In the existing two-stage turbo supercharger, it is assumed that two turbines are rotated in the same direction, so that it is typically difficult to make the turbo supercharger 3 smaller. However, in the configuration of the embodiment, the exhaust passages in the turbo supercharger 3 can be easily simply designed, and the turbo supercharger 3 can be compact.

The upstream side passage 53UA joined to the upstream section 53U of the small scroll passage 53 and the upstream side passage 55UA joined to the upstream section 55U of the large scroll passage 55 are substantially straight exhaust passages. For this, it is possible to admit exhaust air into the upstream sections 53U and 55U without substantially giving resistance to the flow of the exhaust air. Therefore, larger exhaust air kinetic energy can be given to the large turbine 33T and the small turbine 35T.

In particular, the turbo supercharger 3 of the embodiment is the two-stage turbo supercharger in which the large turbo 3A is aligned in series on the downstream of the small turbo 3B on the supercharger internal exhaust passage 50. In such a turbo supercharger, the upstream side passage 53UA corresponding to the downstream portion of the communication passage 52 and the upstream side passage 55UA corresponding to the downstream portion of the between-turbo passage 54 are substantially straight, so that the flow of exhaust air directing toward the large turbine 33T and the small turbine 35T can be smooth to make the exhaust air kinetic energy larger.

The exhaust air admission passage 51 that admits exhaust air from the engine body 10 is disposed midway between the large turbo 3A and the small turbo 3B. In detail, the exhaust manifold 14 is disposed on one side surface of the engine body 10, the large turbo 3A and the small turbo 3B are disposed in the up-down direction, and the exhaust air admission passage 51 coupled to the exhaust manifold 14 is disposed at the height position midway between the large turbo 3A and the small turbo 3B.

With this configuration, in the configuration in which the upstream section 53U of the small scroll passage 53 and the upstream section 55U of the large scroll passage 55 are disposed, respectively, on the side that is farther than the small turbine shaft 38 and the side that is farther than the large turbine shaft 37 with respect to the engine body 10, and the rotation directions of the large turbine 33T and the small turbine 35T are opposite directions to each other, the layout in which both of the upstream sections 53U and 55U are connected to the exhaust air admission passage 51 by the smooth exhaust passages having a small curving degree can be set to be compact.

In addition, the between-turbo passage 54 is disposed on the side that is farther than the exhaust bypass passage 57 with respect to the engine body 10. The downstream end 57E of the exhaust bypass passage 57 is opposite the upstream section 55U of the large scroll passage 55 at the position closer to the engine body 10 than the downstream end 54E of the between-turbo passage 54 is. For this, the exhaust bypass passage 57 can be easily set as an exhaust passage that is short and has a small curving degree, and when the large turbo 3A is mainly operated, exhaust air can be smoothly sent through the exhaust bypass passage 57 into the upstream section 55U. Therefore, in the two-stage turbo supercharger 3 in which the small turbo 3B is disposed on the upstream of the large turbo 3A, large exhaust air kinetic energy can be given to the large turbine 33T of the large turbo 3A without causing large resistance in the flow of the exhaust air.

The exhaust bypass valve 6 is disposed in the exhaust bypass passage 57, the exhaust bypass valve 6 having the valve body 61 and the turning shaft 63 supporting the valve body 61 in a cantilever manner. The turning shaft 63 extends in the direction substantially parallel to the large turbine shaft 37, and is disposed sideward of the exhaust bypass passage 57 on the side that is closer to the engine body 10. For this, the valve body 61 receives a biasing force in the direction in which the valve body 61 turns about the turning shaft 63 so as to be brought into the opening posture, by the flow of exhaust air passing through the exhaust bypass passage 57. That is, the valve body 61 can be opened without resisting the flow of the exhaust air. Therefore, the valve body 61 can be easily opened at the start of using the exhaust bypass passage 57, and can contribute to the smooth supply of the exhaust air through the exhaust bypass passage 57. In addition, since the valve body 61 is supported by the turning shaft 63 in a cantilever manner, the valve body 61 that has brought into the opening posture completely retracts from the exhaust bypass passage 57. Thus, the valve body 61 can be unlikely to resist the flow of the exhaust air.

The small scroll passage 53 and the large scroll passage 55 are disposed so that the upstream sections 53U and 55U are opposite each other. The exhaust air admission passage 51 is disposed between the large turbo 3A and the small turbo 3B, and the branch passage 50B is disposed between the exhaust air admission passage 51 and each of the upstream section 53U and the upstream section 55U, the branch passage 50B having a Y-shape and connecting the exhaust air admission passage 51 and each of the upstream section 53U and the upstream section 55U. Of the branch passage 50B, the passage that connects the exhaust air admission passage 51 and the upstream section 55U is the exhaust bypass passage 57. For this, there is an advantage that the layout in which the upstream sections 53U and 55U are connected to the exhaust air admission passage 51 by the smooth exhaust passages having a small curving degree by the Y-shaped branch passage 50B can be easily set to be compact.

As described above, according to the engine with a turbo supercharger 1 of the embodiment, the engine on which the turbo supercharger 3 having at least two independent turbos (the large turbo 3A and the small turbo 3B) is disposed, is capable of giving large exhaust air kinetic energy to the large turbine 33T and the small turbine 35T and of making the turbo supercharger 3 compact.

### [Description of modifications]

The embodiment of the present invention has been described above, but the present invention is not limited to this. For example, in the embodiment, the example in which the first turbo is the large turbo 3A and the second turbo is the small turbo 3B is illustrated. In place of this, the first turbo and the second turbo may be turbos having the same turbine capacity.

In the embodiment, the aspect in which the large turbo 3A is disposed on the small turbo 3B is illustrated. The first and second turbos may be aligned not only in the up-down direction, and may be aligned but also in a horizontal direction and an oblique direction. In addition, as long as the first and second turbos satisfy the conditions of the present invention, a further turbo may be disposed.

In the embodiment, the turbo supercharger 3 having the exhaust passages set so that the large turbine 33T and the small turbine 35T rotate in opposite directions to each other is illustrated. According to a non-claimed alternative, the large turbine 33T and the small turbine 35T may rotate in the same direction.

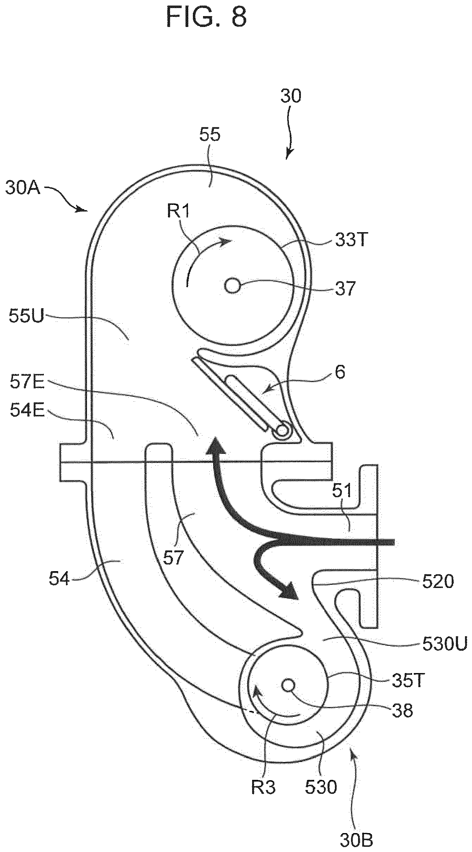

FIG. 8 is a schematic cross-sectional view of a turbo supercharger 30 according to a modification not covered by the claims. The turbo supercharger 30 has a large turbo 30A and a small turbo 30B disposed in the up-down direction. The same portions as the embodiment illustrated in FIG. 4 are indicated by the same reference signs. This modification is the same as the embodiment in that the between-turbo passage 54 is disposed on the side that is farther than the exhaust bypass passage 57 with respect to the engine body 10, and that the downstream end 57E of the exhaust bypass passage 57 is opposite the upstream section 55U of the large scroll passage 55 at the position closer to the engine body 10 than the downstream end 54E of the between-turbo passage 54 is.

This modification is different from the embodiment in the disposition of a communication passage 520 and a small scroll passage 530. An upstream section 530U of the small scroll passage 530 is opened upward at the position closer to the engine body 10 than the small turbine shaft 38 is. The communication passage 520 is a U-turned exhaust passage to connect the upstream section 530U and the downstream end of the exhaust air admission passage 51. The small scroll passage 530 scrolls from the upstream section 530U to the downstream side so as to extend toward the left side of the small turbine shaft 38. With this configuration, the small turbine 35T rotates in a clockwise direction R3 like the large turbine 33T. Also in the turbo supercharger 30 in FIG. 8, the disposing relation between the between-turbo passage 54 and the exhaust bypass passage 57 is the same as that of the embodiment, so that the turbo supercharger 30 can have the same advantage as above.

In another modification, the downstream end 57E of the exhaust bypass passage 57 is desirably cut obliquely in the cross-section orthogonal to the large turbine shaft 37 and the small turbine shaft 38. In the embodiment, the example in which the valve body 61 is supported in a cantilever manner by the turning shaft 63 disposed sideward of the exhaust bypass passage 57 on the side that is closer to the engine body 10 is illustrated. In this configuration, when the downstream end 57E is cut obliquely so as to be high on the left side of the downstream end 57E and to be low on the right side of the downstream end 57E (on the side that is closer to the engine body 10), the valve body 61 can be opened more easily by the flow of exhaust air.

Last, the characteristic configurations disclosed in the embodiment and the operational effects based on them will be summarized.

An engine with a turbo supercharger according to one aspect of the present invention has an engine body, and a turbo supercharger disposed adjacent to the engine body, having an exhaust passage into which exhaust air is supplied from the engine body, and supercharging intake air admitted into the engine body. The turbo supercharger includes a first turbo including a first turbine having a first turbine shaft, and a second turbo including a second turbine having a second turbine shaft. The exhaust passage includes an admission passage admitting the exhaust air from a side of the engine body, a first scroll passage having a first upstream section communicating with the admission passage and guiding the exhaust air toward the first turbine, and a second scroll passage having a second upstream section communicating with the admission passage and guiding the exhaust air toward the second turbine. The first and second scroll passages are passages scrolled so that the first and second upstream sections are disposed, respectively, on a side that is farther than the first turbine shaft and a side that is farther than the second turbine shaft with respect to the engine body, and that downstream sides of the first and second upstream sections face a side closer to the engine body than the first and second turbine shafts are. The first turbine rotates about the first turbine shaft in a predetermined first rotation direction, whereas the second turbine rotates about the second turbine shaft in a second rotation direction opposite the first rotation direction.

According to the engine with a turbo supercharger, the first and second upstream sections that are the scroll starting points of the respective first and second scroll passages are disposed, respectively, on the side that is farther than the first turbine shaft and the side that is farther than the second turbine shaft with respect to the engine body. For this, allowance can be made in the layout of the exhaust passages from the admission passage to the first and second upstream sections, so that the exhaust passages are not required to be extremely curved. Therefore, the flow of the exhaust air in the exhaust passages can be smooth, and large exhaust air kinetic energy can be given to the first and second turbines. In addition, the rotation directions of the first and second turbines are opposite directions to each other. The exhaust passages that are set by assuming that both of the first and second turbines are rotated in the same direction are inevitably required to be largely curved, so that in most cases the turbo supercharger is made larger. However, according to the above configuration, the exhaust passages can be easily simply designed, contributing to making the turbo supercharger compact.

In the engine with a turbo supercharger, desirably, an upstream side passage that is joined to the first upstream section and an upstream side passage that is joined to the second upstream section are straight or gently curved exhaust passages.

According to the engine with a turbo supercharger, it is possible to admit exhaust air into the first upstream section of the first scroll passage and the second upstream section of the second scroll passage without substantially giving resistance to the flow of the exhaust air. Therefore, larger exhaust air kinetic energy can be given to the first and second turbines.

In the engine with a turbo supercharger, desirably, the second turbo is disposed on an upstream side of the first turbo in the exhaust passage, the exhaust passage further includes a communication passage connecting the admission passage and the second upstream section of the second scroll passage, and a between-turbo passage connecting the second turbine and the first upstream section of the first scroll passage, and a portion of the communication passage extending from at least the second upstream section to the upstream side and a portion of the between-turbo passage extending from at least the first upstream section to the upstream side are the upstream side passage that is joined to the second upstream section and the upstream side passage that is joined to the first upstream section, respectively.

According to the engine with a turbo supercharger, in the two-stage turbo supercharger in which the first turbo and the second turbo are aligned in series on the exhaust passage, the flow of exhaust air directing toward the first and second turbines can be smooth to make the exhaust air kinetic energy larger.

In the engine with a turbo supercharger, desirably, the admission passage is disposed between the first turbo and the second turbo.

According to the engine with a turbo supercharger, in the configuration in which the first and second upstream sections are disposed, respectively, on the side that is farther than the first turbine shaft and the side that is farther than the second turbine shaft with respect to the engine body, and the rotation directions of the first and second turbines are opposite directions to each other, the layout in which both of the first and second upstream sections are connected to the admission passage by the smooth exhaust passages having a small curving degree can be easily set to be compact.

In the engine with a turbo supercharger, desirably, the first turbo and the second turbo are disposed in an up-down direction, and the admission passage is disposed at a height position between the first turbo and the second turbo.

According to the engine with a turbo supercharger, when an exhaust manifold is disposed on one side surface of the engine body, the turbo supercharger can be compactly disposed on the side of the side surface.

In the engine with a turbo supercharger, desirably, the exhaust passage further includes the between-turbo passage connecting the second turbine and the first upstream section of the first scroll passage, and an exhaust bypass passage bypassing the second scroll passage and the between-turbo passage to connect the admission passage and the first upstream section, the between-turbo passage is disposed on a side that is farther than the exhaust bypass passage with respect to the engine body, and a downstream end of the exhaust bypass passage is opposite the first upstream section at a position closer to the engine body than a downstream end of the between-turbo passage is.

According to the engine with a turbo supercharger, the first upstream section of the first scroll passage is disposed on the side that is farther than the first turbine shaft with respect to the engine body. For this, allowance can be made in the layout of the exhaust passage from the admission passage to the first upstream section, so that the exhaust passage is not required to be extremely curved. The between-turbo passage is disposed on the side that is farther than the exhaust bypass passage with respect to the engine body, and the downstream end of the exhaust bypass passage is opposite the first upstream section at the position closer to the engine body than the downstream end of the between-turbo passage is. For this, the exhaust bypass passage can be easily set as an exhaust passage that is short and has a small curving degree, and when the first turbo is mainly operated, exhaust air can be smoothly sent through the exhaust bypass passage into the first upstream section. Therefore, large exhaust air kinetic energy can be given to the first turbine of the first turbo without causing large resistance in the flow of the exhaust air.

In the engine with a turbo supercharger, desirably, the engine further has a bypass valve disposed in the exhaust bypass passage and opening and closing the exhaust bypass passage, the bypass valve includes a valve body having a shape capable of closing the exhaust bypass passage, and a turning shaft supporting the valve body in a cantilever manner, the turning shaft being turned about an axis of the turning shaft to posture change the valve body between a posture closing the exhaust bypass passage and a posture opening the bypass passage, and the turning shaft extends in a direction substantially parallel to the first turbine shaft and is disposed sideward of the exhaust bypass passage on a side that is closer to the engine body in a cross section orthogonal to the first turbine shaft.

According to the engine with a turbo supercharger, the bypass valve receives a biasing force in the direction in which the bypass valve turns about the turning shaft so as to be brought into the opening posture, by the flow of exhaust air that passes through the exhaust bypass passage. That is, the valve body can be opened without resisting the flow of the exhaust air. Therefore, the valve body can be easily opened at the start of using the exhaust bypass passage, and can contribute to the smooth supply of the exhaust air through the exhaust bypass passage.

In the engine with a turbo supercharger, desirably, the first scroll passage and the second scroll passage are disposed so that the first upstream section and the second upstream section are opposite each other, the admission passage is disposed between the first turbo and the second turbo, a branch passage is disposed between the admission passage and each of the first upstream section and the second upstream section, the branch passage having a Y-shape and connecting the admission passage and each of the first upstream section and the second upstream section, and of the branch passage, the passage connecting the admission passage and the first upstream section is the exhaust bypass passage.

According to the engine with a turbo supercharger, the layout in which both of the first and second upstream sections are connected to the admission passage by the smooth exhaust passages having a small curving degree by the Y-shaped branch passage can be easily set to be compact.

In the engine with a turbo supercharger, the first turbo is a large turbo supercharging section operated mainly from a medium speed rotation range to a high speed rotation range of the engine body, and the second turbo is a small turbo supercharging section operated mainly in a low speed rotation range of the engine body, which is one of the preferred embodiments.

As described above, according to the present invention, it is possible to provide the engine with a turbo supercharger, the engine on which the turbo supercharger having at least two independent turbos is disposed, being capable of giving large exhaust air kinetic energy to the turbines and of being made compact.

## Claims

1. An engine (1) with a turbo supercharger comprising:
an engine body (10); and
a turbo supercharger (3) disposed adjacent to the engine body (10), having an exhaust passage (50) into which exhaust air is supplied from the engine body (10), and supercharging intake air admitted into the engine body (10),
wherein the turbo supercharger (3) includes a first turbo (3A) including a first turbine (33T) having a first turbine shaft (37) and operated mainly in a high speed rotation range of the engine body (10), and a second turbo (3B) including a second turbine (35T) having a second turbine shaft (38) and operated mainly in a low speed rotation range of the engine body (10),
wherein the exhaust passage (50) includes:
an admission passage (51) admitting the exhaust air from a side of the engine body (10);
a first scroll passage (55) having a first upstream section (55U), as a scroll starting point, communicating with the admission passage (51) and guiding the exhaust air toward the first turbine (33T); and
a between-turbo passage (54) connecting the second turbine (35T) and the first upstream section (55U) of the first scroll passage (55);
a second scroll passage (53) having a second upstream section (53U), as a scroll starting point, communicating with the admission passage (51) and guiding the exhaust air toward the second turbine (35T),
a communication passage (52) connecting the admission passage (51) and the second upstream section (53U) of the second scroll passage (53); and
an exhaust bypass passage (57) bypassing the second scroll passage (53) to connect an upstream section of the communication passage (52) and the first upstream section (55U) of the first scroll passage (55);
wherein an exhaust bypass valve (6) is disposed in the exhaust bypass passage (57), the exhaust bypass valve (6) including a valve body (61) that opens and closes the exhaust bypass passage (57) and a turning shaft (63) that supports the valve body (61) in a cantilever manner, and the turning shaft (63) being disposed at a side that is closer to the engine body (10) than the valve body (61) in a cross section orthogonal to the first turbine shaft (37), and the exhaust bypass valve (6) closes the exhaust bypass passage (57) in the low speed rotation range and opens the exhaust bypass passage (57) in the high speed rotation range;
into the first upstream section (55U), a downstream end (54E) of the between-turbo passage (54) and a downstream end (57E) of the exhaust bypass passage (57) are merged on the cross section orthogonal to the first turbine shaft (37), the downstream end (57E) of the exhaust bypass passage (57) being disposed at a position closer to the engine body (10) than downstream end (54E) of the between-turbo passage (54), and the valve body (61) being disposed such that the valve body (61) is present in the cross section from opening the exhaust bypass passage (57) to closing the exhaust bypass passage (57);
the first and second scroll passages (55,53) are passages scrolled so that the first and second upstream sections (55U,53U) are disposed, respectively, on a side that is farther than the first turbine shaft (37) and a side that is farther than the second turbine shaft (38) with respect to the engine body (10), and that downstream sides of the first and second upstream sections (55U,53U) face a side closer to the engine body (10) than the first and second turbine shafts (37,38) are,
the first turbine (33T) rotates about the first turbine shaft (37) in a predetermined first rotation direction (R1), whereas the second turbine (35T) rotates about the second turbine shaft (38) in a second rotation direction (R2) opposite the first rotation direction,
the first turbo (3A), the first scroll passage (55), the downstream end (54E) of the between-turbo passage (54), the downstream end (57E) of the exhaust bypass passage (57) and the exhaust bypass valve (6) are housed in a first turbine chamber (33) with a first flange (313), and
the second turbo (3B), the second scroll passage (53), the admission passage (51), the communication passage (52), an upstream end of the between-turbo passage (54) and an upstream end of the exhaust bypass passage (57) are housed in a second turbine chamber (32) with a second flange (322) that is coupled to the first flange (313).

2. The engine (1) according to claim 1,
wherein an upstream side passage (55UA) that is joined to the first upstream section (55U) and an upstream side passage (53UA) that is joined to the second upstream section (53U) are straight or gently curved exhaust passages.

3. The engine (1) according to claim 2,
wherein the second turbo (3B) is disposed on an upstream side of the first turbo (3A) in the exhaust passage (50),
wherein a portion of the communication passage (52) extending from at least the second upstream section (53U) to the upstream side and a portion of the between-turbo passage (54) extending from at least the first upstream section (55U) to the upstream side are the upstream side passage (53UA) that is joined to the second upstream section (53U) and the upstream side passage (55UA) that is joined to the first upstream section (55U), respectively.

4. The engine (1) according to claim 1,
wherein the admission passage (51) is disposed between the first turbo (3A) and the second turbo (3B).

5. The engine (1) according to claim 4,
wherein the first turbo (3A) and the second turbo (3B) are disposed in an up-down direction,
wherein the admission passage (51) is disposed at a height position between the first turbo and the second turbo.

6. The engine (1) according to claim 1,
wherein the first scroll passage (55) and the second scroll passage (53) are disposed so that the first upstream section (55U) and the second upstream section (53U) are opposite each other,
wherein the admission passage (51) is disposed between the first turbo and the second turbo (3A,3B),
wherein a branch passage (50B) is disposed between the admission passage (51) and each of the first upstream section (55U) and the second upstream section (53U), the branch passage (50B) having a Y-shape and connecting the admission passage and each of the first upstream section and the second upstream section,
wherein of the branch passage (50B), the passage connecting the admission passage (51) and the first upstream section (55U) is the exhaust bypass passage (57).

7. The engine (1) according to any one of claims 1 to 6,
wherein the first turbo (3A) is a large turbo supercharging section operated mainly from a medium speed rotation range to a high speed rotation range of the engine body (10),
wherein the second turbo (3B) is a small turbo supercharging section operated mainly in a low speed rotation range of the engine body (10).

## Patentansprüche

1. Motor (1) mit einem Turbolader, umfassend:
einen Motorkörper (10); und
einen Turbolader (3), der angrenzend an bzw. benachbart zu dem Motorkörper (10) angeordnet ist, einen Abgasdurchgang bzw. -trakt (50) aufweist, in den Abluft von dem Motorkörper (10) zugeführt wird, und in den Motorkörper (10) eingelassene Ansaugluft auflädt;
wobei der Turbolader (3) einen ersten Turbo (3A) mit einer ersten Turbine (33T), die eine erste Turbinenwelle (37) aufweist und hauptsächlich in einem hohen Drehzahlbereich des Motorkörpers (10) betrieben wird, und einen zweiten Turbo (3B) mit einer zweiten Turbine (35T) enthält, die eine zweite Turbinenwelle (38) aufweist und hauptsächlich in einem niedrigen Drehzahlbereich des Motorkörpers (10) betrieben wird;
wobei der Abgasdurchgang (50) enthält:
einen Einlasskanal bzw. -trakt (51), der die Abluft von einer Seite des Motorkörpers (10) einlässt;
einen ersten Scroll- bzw. Spiraldurchgang bzw. -trakt (55) mit einem ersten stromaufwärtigen Abschnitt (55U) als einem Spiralausgangspunkt, der mit dem Einlassdurchgang (51) in Verbindung ist und die Abluft zu der ersten Turbine (33T) führt; und
einen Zwischen-Turbo-Durchgang bzw. -Trakt (54), der die zweite Turbine (35T) und den ersten stromaufwärtigen Abschnitt (55U) des ersten Spiraldurchgangs (55) verbindet;
einen zweiten Scroll- bzw. Spiraldurchgang bzw. -trakt (53) mit einem zweiten stromaufwärtigen Abschnitt (53U) als einem Spiralausgangspunkt, der mit dem Einlassdurchgang (51) in Verbindung ist und die Abluft zu der zweiten Turbine (35T) führt;
einen Kommunikationsdurchgang bzw. -trakt (52), der den Einlassdurchgang (51) und den zweiten stromaufwärtigen Abschnitt (53U) des zweiten Spiraldurchgangs (53) verbindet; und
einen Abgasbypassdurchgang bzw. -trakt (57), der den zweiten Spiraldurchgang (53) umgeht, um einen stromaufwärtigen Abschnitt des Kommunikationsdurchgangs (52) und den ersten stromaufwärtigen Abschnitt (55U) des ersten Spiraldurchgangs (55) zu verbinden;
wobei ein Abgasbypassventil (6) in dem Abgasbypassdurchgang (57) angeordnet ist, wobei das Abgasbypassventil (6) einen Ventilkörper (61), der den Abgasbypasskanal (57) öffnet und schließt, und eine Drehwelle (63) enthält, die den Ventilkörper (61) auf freitragende Weise stützt bzw. trägt, und wobei die Drehwelle (63) an einer Seite angeordnet ist, die näher an dem Motorkörper (10) ist als der Ventilkörper (61) in einem Querschnitt orthogonal zu der ersten Turbinenwelle (37), und wobei das Abgasbypassventil (6) den Abgasbypasskanal (57) in dem niedrigen Drehzahlbereich schließt und den Abgasbypasskanal (57) in dem hohen Drehzahlbereich öffnet;
wobei in den ersten stromaufwärtigen Abschnitt (55U) ein stromabwärtiges Ende (54E) des Zwischen-Turbo-Durchgangs (54) und ein stromabwärtiges Ende (57E) des Abgasbypassdurchgangs (57) auf bzw. an dem Querschnitt orthogonal zu der ersten Turbinenwelle (37) zusammengeführt sind, wobei das stromabwärtige Ende (57E) des Abgasbypassdurchgangs (57) an einer Position angeordnet ist, die näher am Motorkörper (10) ist als das stromabwärtige Ende (54E) des Zwischen-Turbo-Durchgangs (54), und wobei der Ventilkörper (61) so angeordnet ist, dass der Ventilkörper (61) in dem Querschnitt ab dem Öffnen des Abgasbypassdurchgangs (57) bis zum Schließen des Abgasbypassdurchgangs (57) vorhanden ist;
wobei der erste und der zweite Spiraldurchgang (55, 53) Durchgänge sind, die so gerollt bzw. gescrollt sind, dass der erste und der zweite stromaufwärtige Abschnitt (55U, 53U) auf einer Seite, die weiter weg als die erste Turbinenwelle (37) ist, bzw. einer Seite angeordnet sind, die in Bezug auf den Motorkörper (10) weiter weg als die zweite Turbinenwelle (38) ist, und die stromabwärtigen Seiten des ersten und des zweiten stromaufwärtigen Abschnitts (55U, 53U) einer Seite zugewandt sind, die näher an dem Motorkörper (10) ist als die erste und die zweite Turbinenwelle (37, 38),
wobei sich die erste Turbine (33T) in einer vorbestimmten ersten Drehrichtung (R1) um die erste Turbinenwelle (37) dreht, während sich die zweite Turbine (35T) in einer zweiten Drehrichtung (R2) entgegengesetzt zu der ersten Drehrichtung um die zweite Turbinenwelle (38) dreht,
wobei der erste Turbo (3A), der erste Spiraldurchgang (55), das stromabwärtige Ende (54E) des Zwischen-Turbo-Durchgangs (54), das stromabwärtige Ende (57E) des Abgasbypasskanals (57) und das Abgasbypassventil (6) in einer ersten Turbinenkammer (33) mit einem ersten Flansch (313) untergebracht sind, und
wobei der zweite Turbo (3B), der zweite Spiraldurchgang (53), der Einlassdurchgang (51), der Kommunikationsdurchgang (52), ein stromaufwärtiges Ende des Zwischen-Turbo-Durchgangs (54) und ein stromaufwärtiges Ende des Abgasbypassdurchgangs (57) in einer zweiten Turbinenkammer (32) mit einem zweiten Flansch (322) untergebracht sind, der mit dem ersten Flansch (313) gekoppelt ist.

2. Motor (1) nach Anspruch 1,
wobei ein stromaufwärtiger Seitendurchgang bzw. -trakt (55UA), der mit dem ersten stromaufwärtigen Abschnitt (55U) verbunden ist, und ein stromaufwärtiger Seitendurchgang bzw. -trakt (53UA), der mit dem zweiten stromaufwärtigen Abschnitt (53U) verbunden ist, gerade oder leicht gekrümmte Abgasdurchgänge sind.

3. Motor (1) nach Anspruch 2,
wobei der zweite Turbo (3B) auf einer stromaufwärtigen Seite des ersten Turbos (3A) in dem Abgasdurchgang (50) angeordnet ist;
wobei sich ein Abschnitt des Kommunikationsdurchgangs (52), der sich von zumindest dem zweiten stromaufwärtigen Abschnitt (53U) zu der stromaufwärtigen Seite erstreckt, und ein Abschnitt des Zwischen-Turbo-Durchgangs (54), der sich von zumindest dem ersten stromaufwärtigen Abschnitt (55U) zu der stromaufwärtigen Seite erstreckt, der stromaufwärtige Seitendurchgang (53UA), der mit dem zweiten stromaufwärtigen Abschnitt (53U) verbunden ist, bzw. der stromaufwärtige Seitendurchgang (55UA) sind, der mit dem ersten stromaufwärtigen Abschnitt (55U) verbunden ist.

4. Motor (1) nach Anspruch 1,
wobei der Einlassdurchgang (51) zwischen dem ersten Turbo (3A) und dem zweiten Turbo (3B) angeordnet ist.

5. Motor (1) nach Anspruch 4,
wobei der erste Turbo (3A) und der zweite Turbo (3B) in einer Oben-Unten-Richtung angeordnet sind,
wobei der Einlassdurchgang (51) an einer Höhenposition zwischen dem ersten Turbo und dem zweiten Turbo angeordnet ist.

6. Motor (1) nach Anspruch 1,
wobei der erste Spiraldurchgang (55) und der zweite Spiraldurchgang (53) so angeordnet sind, dass der erste stromaufwärtige Abschnitt (55U) und der zweite stromaufwärtige Abschnitt (53U) einander gegenüberliegen bzw. entgegengesetzt sind,
wobei der Einlassdurchgang (51) zwischen dem ersten Turbo und dem zweiten Turbo (3A, 3B) angeordnet ist,
wobei ein Abzweigdurchgang bzw. -trakt (50B) zwischen dem Einlassdurchgang (51) und jedem des ersten stromaufwärtigen Abschnitts (55U) und des zweiten stromaufwärtigen Abschnitts (53U) angeordnet ist, wobei der Abzweigdurchgang (50B) eine Y-Form aufweist und den Einlassdurchgang mit jedem bzw. und jeden des ersten stromaufwärtigen Abschnitts und des zweiten stromaufwärtigen Abschnitts verbindet,
wobei von dem Abzweigdurchgang (50B) der Durchgang, der den Einlassdurchgang (51) und den ersten stromaufwärtigen Abschnitt (55U) verbindet, der Abgasbypassdurchgang (57) ist.

7. Motor (1) nach einem der Ansprüche 1 bis 6,
wobei der erste Turbo (3A) ein großer Turboladeabschnitt ist, der hauptsächlich von einem mittleren Drehzahlbereich bis zu einem hohlen Drehzahlbereich des Motorkörpers (10) betrieben wird;
wobei der zweite Turbo (3B) ein kleiner Turboladeabschnitt ist, der hauptsächlich in einem niedrigen Drehzahlbereich des Motorkörpers (10) betrieben wird.

## Revendications

1. Moteur (1) avec un turbocompresseur de suralimentation comprenant :
un corps de moteur (10) ; et
un turbocompresseur de suralimentation (3) disposé de manière adjacente au corps de moteur (10), ayant un passage d'échappement (50) dans lequel de l'air d'échappement est fourni depuis le corps de moteur (10), et de l'air d'admission de suralimentation admis dans le corps de moteur (10),
dans lequel le turbocompresseur de suralimentation (3) inclut un premier turbocompresseur (3A) incluant une première turbine (33T) ayant un premier arbre de turbine (27) et principalement opéré dans une plage de rotation à haute vitesse du corps de moteur (10), et un second turbocompresseur (3B) incluant une seconde turbine (35T) ayant un second arbre de turbine (38) et principalement opéré dans une plage de rotation à basse vitesse du corps de moteur (10),
dans lequel le passage d'échappement (50) inclut :
un passage d'admission (51) admettant l'air d'échappement provenant d'un côté du corps de moteur (10) ;
un premier passage en spirale (55) ayant une première section amont (55U), en tant que point de départ de spirale, communiquant avec le passage d'admission (51) et guidant l'air d'échappement vers la première turbine (33T) ; et
un passage entre turbocompresseurs (54) connectant la seconde turbine (35T) et la première section amont (55U) du premier passage en spirale (55) ;
un second passage en spirale (53) ayant une seconde section amont (53U), en tant que point de départ de spirale, communiquant avec le passage d'admission (51) et guidant l'air d'échappement vers la seconde turbine (35T),
un passage de communication (52) connectant le passage d'admission (51) et la seconde section amont (53U) du second passage en spirale (53) ; et
un passage de dérivation d'échappement (57) contournant le second passage en spirale (53) pour connecter une section amont du passage de communication (52) et la première section amont (55U) du premier passage en spirale (55) ;
dans lequel une soupape de dérivation d'échappement (6) est disposée dans le passage de dérivation d'échappement (57), la soupape de dérivation d'échappement (6) incluant un corps de soupape (61) qui ouvre et ferme le passage de dérivation d'échappement (57) et un arbre de rotation (63) qui supporte le corps de soupape (61) en porte-à-faux, et l'arbre de rotation (63) étant disposé sur un côté qui est plus proche du corps de moteur (10) que le corps de soupape (61) dans une section transversale orthogonale au premier arbre de turbine (37), et la soupape de dérivation d'échappement (6) ferme le passage de dérivation d'échappement (57) dans la plage de rotation à basse vitesse et ouvre le passage de dérivation d'échappement (57) dans la plage de rotation à haute vitesse ;
dans la première section amont (55U), une extrémité aval (54E) du passage entre turbocompresseurs (54) et une extrémité aval (57E) du passage de dérivation d'échappement (57) sont fusionnées sur la section transversale orthogonale au premier arbre de turbine (37), l'extrémité aval (57E) du passage de dérivation d'échappement (57) étant disposée à une position plus proche du corps de moteur (10) que l'extrémité aval (54E) du passage entre turbocompresseurs (54), et le corps de soupape (61) étant disposé de sorte que le corps de soupape (61) est présent dans la section transversale de l'ouverture du passage de dérivation d'échappement (57) à la fermeture du passage de dérivation d'échappement (57) ;
les premier et second passages en spirale (55, 53) sont des passages spiralés de sorte que les première et seconde sections amont (55U, 53U) sont disposées, respectivement, sur un côté qui est plus éloigné que le premier arbre de turbine (37) et un côté qui est plus éloigné que le second arbre de turbine (38) par rapport au corps de moteur (10), et que des côtés aval des première et seconde sections amont (55U, 53U) sont tournés vers un côté plus proche du corps de moteur (10) que les premier et second arbres de turbine (37, 38) ne le sont,
la première turbine (33T) tourne autour du premier arbre de turbine (37) dans une première direction de rotation prédéterminée (R1), tandis que la seconde turbine (35T) tourne autour du second arbre de turbine (38) dans une seconde direction de rotation (R2) opposée à la première direction de rotation,
le premier turbocompresseur (3A), le premier passage en spirale (55), l'extrémité aval (54E) du passage entre turbocompresseurs (54), l'extrémité aval (57E) du passage de dérivation d'échappement (57) et la soupape de dérivation d'échappement (6) sont hébergés dans une première chambre de turbine (33) avec une première bride (313), et
le second turbocompresseur (3B), le second passage en spirale (53), le passage d'admission (51), le passage de communication (52), une extrémité amont du passage entre turbocompresseurs (54) et une extrémité amont du passage de dérivation d'échappement (57) sont hébergés dans une seconde chambre de turbine (32) avec une seconde bride (322) qui est couplée à la première bride (313).

2. Moteur (1) selon la revendication 1,
dans lequel un passage latéral amont (55UA) qui est relié à la première section amont (55U) et un passage latéral amont (53UA) qui est relié à la seconde section amont (53U) sont des passages d'échappement droits ou à courbure douce.

3. Moteur (1) selon la revendication 2,
dans lequel le second turbocompresseur (3B) est disposé sur un côté amont du premier turbocompresseur (3A) dans le passage d'échappement (50),
dans lequel une portion du passage de communication (52) s'étendant d'au moins la seconde section amont (3U) au côté amont et une portion du passage entre turbocompresseurs (54) s'étendant d'au moins la première section amont (55U) au côté amont sont le passage latéral amont (53UA) qui est relié à la seconde section amont (53U) et le passage latéral amont (55UA) qui est relié à la première section amont (55U), respectivement.

4. Moteur (1) selon la revendication 1,
dans lequel le passage d'admission (51) est disposé entre le premier turbocompresseur (3A) et le second turbocompresseur (3B).

5. Moteur (1) selon la revendication 4,
dans lequel le premier turbocompresseur (3A) et le second turbocompresseur (3B) sont disposés dans une direction haut-bas,
dans lequel le passage d'admission (51) est disposé à une position en hauteur entre le premier turbocompresseur et le second turbocompresseur.

6. Moteur (1) selon la revendication 1,
dans lequel le premier passage en spirale (55) et le second passage en spirale (53) sont disposés de sorte que la première section amont (55U) et la seconde section amont (53U) sont opposées l'une à l'autre,
dans lequel le passage d'admission (51) est disposé entre le premier turbocompresseur et le second turbocompresseur (3A, 3B),
dans lequel un passage de ramification (50B) est disposé entre le passage d'admission (51) et chacune de la première section amont (55U) et la seconde section amont (53U), le passage de ramification (50B) ayant une forme en Y et connectant le passage d'admission et chacune de la première section amont et la seconde section amont,
dans lequel du passage de ramification (50B), le passage connectant le passage d'admission (51) et la première section amont (55U) est le passage de dérivation d'échappement (57).

7. Moteur (1) selon l'une quelconque des revendications 1 à 6,
dans lequel le premier turbocompresseur (3A) est une grande section de suralimentation de turbocompresseur principalement opérée d'une plage de rotation à vitesse moyenne à une plage de rotation à haute vitesse du corps de moteur (10),
dans lequel le second turbocompresseur (3B) est une petite section de suralimentation de turbocompresseur principalement opérée dans une plage de rotation à basse vitesse du corps de moteur (10).
